# EUROPEAN PATENT SPECIFICATION

(11) **EP 0 443 762 B1**
(45) Date of publication and mention of the grant of the patent: **29.05.1996**
(21) Application number: 91301119.3
(22) Date of filing: 12.02.1991
(51) Int. Cl.: B60C 1/00

(54) **Radial tyre**
Radialer Reifen
Pneumatique radial

(30) Priority: 17.02.1990 JP 36754/90
(43) Date of publication of application: 28.08.1991
(73) Proprietor: SUMITOMO RUBBER INDUSTRIES LIMITED, Chuo-ku Kobe-shi Hyogo 651 (JP)
(72) Inventor: Saito, Yuichi, Kobe-shi, Hyogo (JP); Kikuchi, Naohiko Sumitomogomu Sumiyoshi-Ryou, Kobe-shi Hyogo (JP); Watanuma, Susumu, Kobe-shi, Hyogo (JP); Noma, Hiroyuki, Kobe-shi, Hyogo (JP)
(74) Representative: Stewart, Charles Geoffrey

(56) References cited:
- EP-A- 0 161 793
- EP-A- 0 171 935
- EP-A- 0 234 303
- EP-A- 0 263 885
- EP-A- 0 430 617
- US-A- 4 745 150

## Description

The present invention relates to a radial tyre particularly suitable for passenger cars which has a tread rubber suitable for the properties of each car.

Passenger cars now have very high performance, because many improvements have been made to engines and other mechanical or electrical elements of the cars. For example, the power output of engines is enhanced and body weight is reduced. Also, starting, accelerating and cornering properties are significantly improved.

As the properties of the cars, the power output of the engine, which indicates the horsepower of the car, and body weight are important, but the way how they are characterised or classified is different by each motor manufacturing company. It is also important in view of safety that the tyres which are suitable for the car are selected according to the performance of the car, whereby the performance of the car can be adequately drawn out. For example EP-A-0430617 (falling under Art. 54(3) EPC) discloses a tyre wherein the tread has particular viscoelastic and hardness characteristics providing optimised friction coefficient and cornering force properties which make the tyre particularly suitable for cars benefitting from the fitment of an anti-lock braking system.

However, in the development of the tyres, especially in the development of the tread rubbers, which greatly contributes to the properties of the tyres, it has not been considered to satisfy the performance of the car, excepting tyres for very special cars. Actually, in order to balance grip properties, ride comfort wear resistance and the like, some rubbers are mixed to find a compromise point in which some sacrifice is made of the properties of each rubber.

An object of the present invention is to provide a car fitted with a radial tyre which is suitable for that car. Accordingly the present invention provides a car including radial tyres each comprising a tread and a sidewall, the car having a characteristic α where α is obtained from an equation represented by$\frac{\text{Engine output x 10}}{\text{Body Weight + 60}}$ where Engine output is a net value of the engine output of the car in ps unit and body weight is a weight of the empty car in Kg, and the tyres having treads comprising a material having a relation between viscoelasticity (tan δ) peak temperature (Tg) and said α value specified by one of the formula below and a one side half width (W/2) near the tan δ peak temperature which is 25 degrees or less; the formula being$\begin{matrix}\begin{matrix}\text{Tg ≦ 16.2α - 34.2} \\ \text{Tg ≧} \sqrt{\frac{{\text{{128}}^{\text{2}} {\text{-36}}^{\text{2}} {\text{(α-3.5)}}^{\text{2}} \text{}}}{\text{1.825}}} \text{- 83}\end{matrix}\end{matrix}$ when 0≦α≦1;$\begin{matrix}\begin{matrix}\text{Tg ≦} \sqrt{\frac{{\text{{217}}^{\text{2}} {\text{-36}}^{\text{2}} {\text{(α-4.82)}}^{\text{2}} \text{}}}{\text{1.825}}} \text{- 110} \\ \text{Tg ≧} \sqrt{\frac{{\text{{196.5}}^{\text{2}} {\text{-36}}^{\text{2}} {\text{(α-4.82)}}^{\text{2}} \text{}}}{\text{1.825}}} \text{- 110}\end{matrix}\end{matrix}$ when 1≦α≦2;$\begin{matrix}\begin{matrix}\text{Tg ≦} \sqrt{\frac{{\text{{141.7}}^{\text{2}} {\text{-36}}^{\text{2}} {\text{(α-3)}}^{\text{2}} \text{}}}{\text{1.825}}} \text{- 80} \\ \text{Tg ≧} \sqrt{\frac{{\text{{85}}^{\text{2}} {\text{-36}}^{\text{2}} {\text{(α-3)}}^{\text{2}} \text{}}}{\text{1.825}}} \text{- 60}\end{matrix}\end{matrix}$ when 2≦α≦4.22;$\begin{matrix}\begin{matrix}\text{Tg ≦-2.4} \\ \text{Tg ≧-13.4}\end{matrix}\end{matrix}$ when 4.22≦α
where Tg is obtained from a viscoelasticity (tan δ) temperature distribution curve which is determined using a viscoelastic spectrometer at a frequency of 10 Hz, an initial strain of 10%, an amplitude of ± 0.25 % and a temperature elevating rate of 2°C/min.

### Brief Explanation of the Drawing

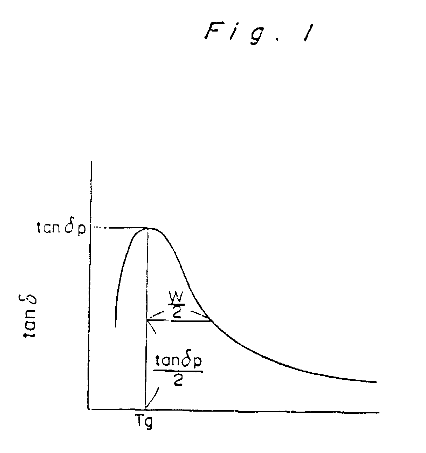

Fig.1. shows a typical viscoelasticity temperature distribution curve for explaining the viscoelasticity (tan δ) peak temperature and one side half width.

### Detailed Description of the Invention

According to the present invention, an α value is introduced as an index of the properties of the car. The car therefore is classified by the α value. A car which has a high α value is a sports car having a high power and a light body, and a car has a low α value is a vehicle having a heavier body in comparison with horse power, such as an estate car or a light truck.

The viscoelasticity temperature distribution curve of a tyre tread rubber compound may be obtained using a viscoelastic spectrometer (available from Iwamoto Manufacturing Co Ltd). The test is carried out at a frequency of 10 Hz, an initial strain of 10%, an amplitude of ± 0.25 % and a rate of increasing temperature of 2 ° C/min. Fig. 1. shows an example general viscoelasticity/temperature distribution curve determined at the above conditions. The abscissa shows temperature and the ordinate shows viscoelasticity (tan δ). The viscoelasticity peak temperature is indicated by Tg. The one side half width, which is indicated as W/2, is the value for the distance between two points where the line 1/2 peak viscoelasticity (tan δ ) is intersected by both the perpendicular line at Tg and the plotted curve.

In the present invention, Tg, is chosen to satisfy the above mentioned relation according to the α value. If Tg is more than the above range, the grip properties of the tyre will be good, but controllability beyond the grip limit, ride comfort and wear resistance are deteriorated. If Tg is less than the above range, the grip properties of the tyre are poor, so that it is not possible or at least very difficult (the horse power of the car) to properly transmit the horse power of the car to the road surfaces. Radial tyres are generally composed of a tread and a sidewall and in the present invention the tread has certain specified properties. The tread also may have a one side half width (W/2) near the tan δ peak temperature of 25 deg or less. If it is more than 25 deg, the tyre exhibits a smaller improvement in its properties even if the tread satisfies the claimed Tg range and α value. The properties of the car may then of course be adversely effected.

The tread is generally prepared from a rubber composition which comprises a rubber component, a reinforcing material and a vulcanising agent. A method for producing the tread of the present invention is known to persons skilled in the art. The adjustment of the physical properties as mentioned above is generally conducted by selecting rubber components, crosslinking agents, the amounts of the crosslinking agents, the vulcanising time and the like.

Rubber components suitable for the tread of the present invention includes styrene butadiene rubber high vinyl butadiene rubber, 3.4 isoprene rubber isoprene butadiene rubber and the like. It is preferred that the rubber composition contains from 60 to 100 % by weight of a solution polymerised styrene butadiene rubber which has a styrene content of 15 to 45 % by weight and a vinyl content in the butadiene portion of 10 to 75 % by weight. The reinforcing material of the rubber composition is one which is used for tyre treads, for example carbon black. The carbon black preferably has a particle size of 15 to 35 micrometer. Particle sizes of less than 15 micrometer increase exothermic heat and rolling resistance and those of more than 35 micrometer deteriorates wear resistance and grip properties. The vulcanising agent is generally sulphur, but others (e.g. organic peroxides) may be used.

The rubber composition may contain additives, such as wax, oil, antioxidant, filler, vulcanisation accelerator and the like.

### Examples

The present invention is illustrated by the following example which, however, are not to be construed as limiting the invention to their details.

### Example 1

Styrene butadiene rubber (SBR) having the characteristics as shown in Table 1 was employed and a rubber composition was prepared from formula or charge A, B, or C as shown in Table 2. A tread rubber was prepared from each rubber composition and then formed into a tyre. Table 3 shows the car type employed for the tests, its α value and tyre size.

The Tg and the one side half width measured for each tread rubber are shown in Table 4. Grip properties, vehicle control properties and ride comfort were evaluated at the Sumitomo Rubber Test Course in Okayama-ken, Japan and the results are shown in Table 4.

### Grip properties

Adhesion in lane change and limit of lateral adhesion during cornering.

### Control properties.

Stability in adhesion limit in cornering and behaviour in power on/off during cornering.

Ride comfort on rough and uneven road and harshness level.

### Subjective Rating.

- 5: Excellent
- 4: Better
- 3.5: Slightly better
- 3.: Control
- 2.5: Slightly worse
- 2: Worse
- 1: Very bad

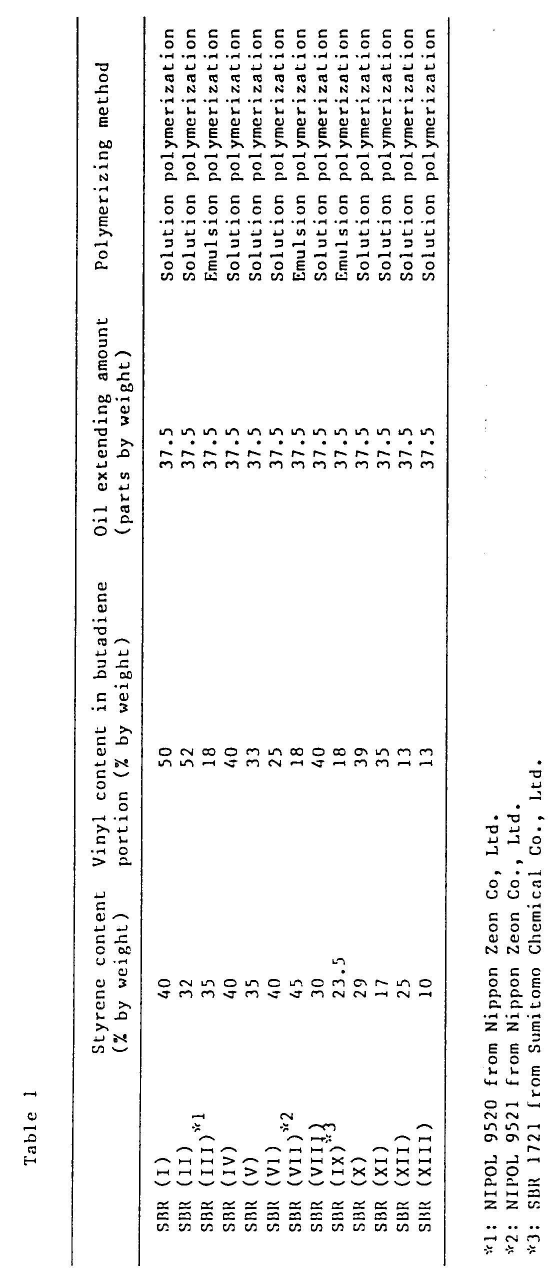

**Table 2**

| | A | B | C |
|---|---|---|---|
| Oil extended SBR | 137.5 | 137.5 | 68.75 |
| Natural rubber (RSS#3) | - | - | 50 |
| Carbon Black | 90 | 90 | 90 |
| Aroma oil | 20.5 | 16.5 | 26.25 |
| Wax | 2 | 2 | 2 |
| Antioxidant ¹ | 2 | 2 | 2 |
| Stearic acid | 2 | 2 | 2 |
| Zinc oxide | 3 | 3 | 3 |
| Sulfur | 1.75 | 1.75 | 1.75 |
| Vulcanization accelerator² | 1 | 1 | 1 |
| Unit: parts by weight | | | |

| | | | |
|---|---|---|---|
| ¹ N,N'-phynyl-p-phenylenediamine | | | |
| ² N-cyclohexyl-2-benzothiazyl sulfonamide | | | |

**Table 3**

| | | α value | Engine output (ps) | Body weight (Kg) | Tyre size |
|---|---|---|---|---|---|
| A | French sports car | 2.76 | 450 | 1,570 | F) 235/45 ZR17 |
| | | | | | R) 255/40 ZR17 |
| B | French sports car | 1.95 | 320 | 1,580 | F) 225/50 ZR16 |
| | | | | | R) 245/45 ZR16 |
| C | Japanese sports car | 1.54 | 230 | 1,430 | 225/50 ZR17 |
| D | Japanese passenger car | 1.10 | 120 | 1,030 | 185/60 R14 |
| E | Japanese passenger car | 0.82 | 73 | 830 | 165/70 R13 |
| F | Japanese wagon | 0.54 | 85 | 1,500 | 215 SR15 |

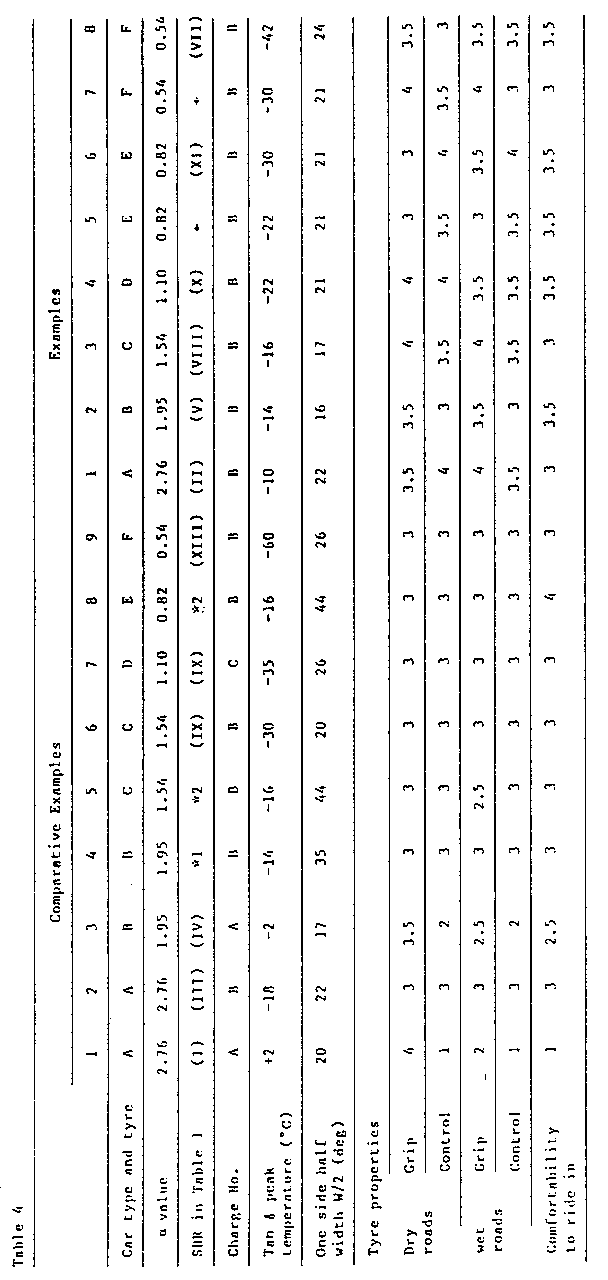

## Claims

1. A passenger car including radial tyres each comprising a tread and a sidewall, the car having a characteristic α where α is obtained from an equation represented by$\frac{\text{Engine output x 10}}{\text{Body Weight + 60}}$ where Engine output is a net value of the engine output of the car in ps unit and body weight is a weight of the empty car in Kg, and the tyres having treads comprising a material having a relation between viscoelasticity (tan δ) peak temperature (Tg) and said α value specified by one of the formula below and a one side half width (W/2) near the tan δ peak temperature which is 25 degrees or less; the formula being$\begin{matrix}\begin{matrix}\text{Tg ≦ 16.2α - 34.2} \\ \text{Tg ≧} \sqrt{\frac{{\text{{128}}^{\text{2}} {\text{-36}}^{\text{2}} {\text{(α-3.5)}}^{\text{2}} \text{}}}{\text{1.825}}} \text{- 83}\end{matrix}\end{matrix}$ when 0≦α≦1;$\begin{matrix}\begin{matrix}\text{Tg ≦} \sqrt{\frac{{\text{{217}}^{\text{2}} {\text{-36}}^{\text{2}} {\text{(α-4.82)}}^{\text{2}} \text{}}}{\text{1.825}}} \text{- 110} \\ \text{Tg ≧} \sqrt{\frac{{\text{{196.5}}^{\text{2}} {\text{-36}}^{\text{2}} {\text{(α-4.82)}}^{\text{2}} \text{}}}{\text{1.825}}} \text{- 110}\end{matrix}\end{matrix}$ when 1≦α≦2;$\begin{matrix}\begin{matrix}\text{Tg ≦} \sqrt{\frac{{\text{{141.7}}^{\text{2}} {\text{-36}}^{\text{2}} {\text{(α-3)}}^{\text{2}} \text{}}}{\text{1.825}}} \text{- 80} \\ \text{Tg ≧} \sqrt{\frac{{\text{{85}}^{\text{2}} {\text{-36}}^{\text{2}} {\text{(α-3)}}^{\text{2}} \text{}}}{\text{1.825}}} \text{- 60}\end{matrix}\end{matrix}$ when 2≦α≦4.22;$\begin{matrix}\begin{matrix}\text{Tg ≦-2.4} \\ \text{Tg ≧-13.4}\end{matrix}\end{matrix}$ when 4.22≦α
where Tg is obtained from a viscoelasticity (tan δ) temperature distribution curve which is determined using a viscoelastic spectrometer at a frequency of 10 Hz, an initial strain of 10%, an amplitude of ± 0.25 % and a temperature elevating rate of 2°C/min.

2. A passenger car including radial tyres according to claim 1 characterised in that said tread is prepared by vulcanising a rubber composition which comprises a rubber component, a reinforcing material and a vulcanising agent.

3. A passenger car including radial tyres according to claim 2 characterised said rubber component includes styrene butadiene rubber, high vinyl butadiene rubber, 3,4 isoprene rubber, isoprene butadiene rubber and a mixture thereof.

4. A passenger car including radial tyres according to claim 2 characterised in that said rubber composition contains from 60 to 100% by weight of a solution polymerised styrene butadiene rubber which has a styrene content of 15 to 45 % by weight and a vinyl content in the butadiene portion of 10 to 75 % by weight and which has random styrene distribution.

5. A passenger car including radial tyres according to claim 2 characterised in that said reinforcing material is carbon black.

6. A passenger car including radial tyres according to claim 5 characterised in that said carbon black has a particle size of 15 to 35 micrometer.

7. A passenger car including radial tyres according to claim 2 characterised in that said vulcanising agent is sulphur or organic peroxides.

## Patentansprüche

1. Personenkraftwagen mit radialen Reifen, die jeweils eine Lauffläche und eine Seitenwand umfassen, wobei der Wagen eine Eigenschaft α aufweist und α durch eine Gleichung erhalten wird, die durch$\frac{\text{Maschinenleistung x 10}}{\text{Leergewicht + 60}}$ dargestellt wird, wobei die Maschinenleistung der Nettowert der Maschinenleistung des Wagens in PS-Einheiten und das Leergewicht das Gewicht des leeren Wagens in kg ist, und die Reifen Laufflächen umfassen, die ein Material mit einer Beziehung zwischen der Viskoelastizitäts(tan δ)-Peaktemperatur (Tg) und dem α-Wert, die durch eine der nachstehenden Formeln angegeben ist, und einer Halbbreite (W/2) einer Seite nahe der tan δ-Peaktemperatur aufweisen, die 25 Grad oder weniger beträgt, wobei es sich um folgende Formeln handelt:$\begin{matrix}\begin{matrix}\text{Tg ≦ 16,2α - 34,2} \\ \text{Tg ≧} \sqrt{\frac{{\text{{128}}^{\text{2}} {\text{-36}}^{\text{2}} {\text{(α-3,5)}}^{\text{2}} \text{}}}{\text{1,825}}} \text{- 83}\end{matrix}\end{matrix}$ wenn 0≦α≦1;$\begin{matrix}\begin{matrix}\text{Tg ≦} \sqrt{\frac{{\text{{217}}^{\text{2}} {\text{-36}}^{\text{2}} {\text{(α-4,82)}}^{\text{2}} \text{}}}{\text{1,825}}} \text{- 110} \\ \text{Tg ≧} \sqrt{\frac{{\text{{196,5}}^{\text{2}} {\text{-36}}^{\text{2}} {\text{(α-4,82)}}^{\text{2}} \text{}}}{\text{1,825}}} \text{- 110}\end{matrix}\end{matrix}$ wenn 1≦α≦2;$\begin{matrix}\begin{matrix}\text{Tg ≦} \sqrt{\frac{{\text{{141,7}}^{\text{2}} {\text{-36}}^{\text{2}} {\text{(α-3)}}^{\text{2}} \text{}}}{\text{1,825}}} \text{- 80} \\ \text{Tg ≧} \sqrt{\frac{{\text{{85}}^{\text{2}} {\text{-36}}^{\text{2}} {\text{(α-3)}}^{\text{2}} \text{}}}{\text{1,825}}} \text{- 60}\end{matrix}\end{matrix}$ wenn 2≦α≦4,22;$\begin{matrix}\begin{matrix}\text{Tg ≦-2,4} \\ \text{Tg ≧-13,4}\end{matrix}\end{matrix}$ wenn 4,22≦α,
wobei Tg aus einer Viskoelastizitäts(tan δ)-Temperaturverteilungskurve erhalten wird, die unter Verwendung eines Viskoelastizitätsspektrometers bei einer Frequenz von 10 Hz, einer Anfangsspannung von 10%, einer Amplitude von ± 0,25% und einer Temperatursteigerungsgeschwindigkeit von 2 °C/min bestimmt wird.

2. Personenkraftwagen mit radialen Reifen nach Anspruch 1, dadurch gekennzeichnet, daß die Lauffläche durch Vulkanisieren einer Gummizusammensetzung hergestellt wird, die eine Gummikomponente, ein Verstärkungsmaterial und ein Vulkanisiermittel enthält.

3. Personenkraftwagen mit radialen Reifen nach Anspruch 2, dadurch gekennzeichnet, daß die Gummikomponente Styrolbutadiengummi, Butadiengummi mit einem hohen Vinylanteil, 3,4-Isoprengummi, Isoprenbutadiengummi und ein Gemisch davon enthält.

4. Personenkraftwagen mit radialen Reifen nach Anspruch 2, dadurch gekennzeichnet, daß die Gummizusammensetzung von 60 bis 100 Gew.-% eines in Lösung polymerisierten Styrolbutadiengummis enthält, das einen Styrolgehalt von 15 bis 45 Gew.% und einen Vinylgehalt in dem Butadienteil von 10 bis 75 Gew.-% aufweist und das eine statistische Styrolverteilung aufweist.

5. Personenkraftwagen mit radialen Reifen nach Anspruch 2, dadurch gekennzeichnet, daß das Verstärkungsmaterial Ruß ist.

6. Personenkraftwagen mit radialen Reifen nach Anspruch 5, dadurch gekennzeichnet, daß der Ruß eine Teilchengroße von 15 bis 35 µm aufweist.

7. Personenkraftwagen mit radialen Reifen nach Anspruch 2, dadurch gekennzeichnet, daß das Vulkanisiermittel Schwefel oder organische Peroxide darstellt.

## Revendications

1. Voiture automobile munie de pneumatiques à carcasse radiale comprenant chacun une bande de roulement et un flanc, la voiture automobile ayant un caractéristique α telle que α est obtenue à partir de l'équation représentée par :$\frac{\text{puissance du moteur x 10}}{\text{masse de la carrosserie + 60}}$ la puissance du moteur étant une valeur résultante de la puissance du moteur de la voiture automobile en unités PS, et la masse du corps étant la masse de la voiture automobile vide en kilogrammes, les pneumatiques ayant des bandes de roulement contenant une matière présentant une relation, entre la température de crête (Tg) de viscoélasticité (tgδ) et la valeur α, qui est spécifiée par l'une des formules qui suivent, et une demi-largeur (W/2) du côté proche de la température de crête de tgδ qui est inférieure ou égale à 25°, la formule étant :$\begin{matrix}\begin{matrix}\text{Tg ≦ 16,2 α - 34,2} \\ \text{Tg ≧} \sqrt{\frac{{\text{{128}}^{\text{2}} {\text{-36}}^{\text{2}} {\text{(α-3,5)}}^{\text{2}} \text{}}}{\text{1,825}}} \text{-83 lorsque 0 ≦ α ≦ 1} \\ \text{Tg ≦} \sqrt{\frac{{\text{{217}}^{\text{2}} {\text{-36}}^{\text{2}} {\text{(α-4,82)}}^{\text{2}} \text{}}}{\text{1,825}}} \text{-110} \\ \text{Tg ≧} \sqrt{\frac{{\text{{196,5}}^{\text{2}} {\text{-36}}^{\text{2}} {\text{(α-4,82)}}^{\text{2}} \text{}}}{\text{1,825}}} \text{-110 lorsque 1 ≦ α ≦ 2} \\ \text{Tg ≦} \sqrt{\frac{{\text{{141,7}}^{\text{2}} {\text{-36}}^{\text{2}} {\text{(α-3)}}^{\text{2}} \text{}}}{\text{1,825}}} \text{-80} \\ \text{Tg ≧} \sqrt{\frac{{\text{{85}}^{\text{2}} {\text{-36}}^{\text{2}} {\text{(α-3)}}^{\text{2}} \text{}}}{\text{1,825}}} \text{-60 lorsque 2 ≦ α ≦4,22} \\ \text{Tg ≦ -2,4} \\ \text{Tg ≧ -13,4 lorsque 4,22 ≦ α}\end{matrix}\end{matrix}$ Tg étant obtenue d'après la courbe de distribution de température de viscoélasticité (tgδ) qui est déterminée à l'aide d'un spectromètre viscoélastique à une fréquence de 10 Hz, avec une déformation initiale de 10 %, une amplitude de ±0,25 % et une vitesse d'élévation de température de 2 °C/min.

2. Voiture automobile munie de pneumatiques à carcasse radiale selon la revendication 1, caractérisée en ce que la bande de roulement est préparée par vulcanisation d'une composition de caoutchouc qui contient un ingrédient de caoutchouc, un matériau d'armature et un agent de vulcanisation.

3. Voiture automobile munie de pneumatiques à carcasse radiale selon la revendication 2, caractérisée en ce que l'ingrédient de caoutchouc contient un caoutchouc de butadiène-styrène, un caoutchouc de butadiène à teneur élevée en vinyle, un caoutchouc de 3,4-isoprène, un caoutchouc d'isoprène-butadiène ou un de leurs mélanges.

4. Voiture automobile munie de pneumatiques à carcasse radiale selon la revendication 2, caractérisée en ce que la composition de caoutchouc contient 60 à 100 % en poids d'un caoutchouc de butadiène-styrène polymérisé en solution, ayant une teneur en styrène comprise entre 15 et 45 % en poids, et une teneur en vinyle de la partie butadiène de 10 à 75 % en poids, ayant une distribution statistique de styrène.

5. Voiture automobile munie de pneumatiques à carcasse radiale selon la revendication 2, caractérisée en ce que le matériau d'armature est le noir de carbone.

6. Voiture automobile munie de pneumatiques à carcasse radiale selon la revendication 5, caractérisée en ce que le noir de carbone a une dimension particulaire comprise entre 15 et 35 µm.

7. Voiture automobile munie de pneumatiques à carcasse radiale selon la revendication 2, caractérisée en ce que l'agent de vulcanisation est le soufre ou des peroxydes organiques.
